# EUROPEAN PATENT SPECIFICATION

(11) **EP 2 388 970 B1**
(45) Date of publication and mention of the grant of the patent: **04.06.2014**
(21) Application number: 11004671.1
(22) Date of filing: 19.10.2007
(51) Int. Cl.: H04L 29/06, H04L 12/24

(54) **System, method and apparatus for user equipment registration, activation for PNM**
System, Verfahren und Vorrichtung zur Benutzergerätregistrierung und -aktivierung für PNM
Système, procédé et appareil pour l'enregistrement d'équipement d'utilisateur et l'activation pour PNM

(30) Priority: 20.10.2006 CN 200610140283; 26.01.2007 CN 200710003700
(43) Date of publication of application: 23.11.2011
(62) Divisional of application: 07816608.9
(73) Proprietor: Huawei Technologies Co., Ltd., Guangdong 518129 (CN)
(72) Inventor: Zhu, Dongming, Shenzhen Guangdong Province 518129 (CN); He, Xiaoyan, Shenzhen Guangdong Province 518129 (CN)
(74) Representative: Pfenning, Meinig & Partner GbR

(56) References cited:
- US-A1- 2005 278 420
- "3rd Generation Partnership Project; Technical Specification Group Service and System Aspects; Service requirements for Personal Network Management (PNM); Stage 1 (Release 8)", 3GPP STANDARD; 3GPP TS 22.259, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 June 2006 (2006-06-01), pages 1-27, XP050361295,
- BENQ MOBILE: "Procedures for PNM User Interactions", 3GPP DRAFT; C1-061441_UE-PNM-PROCEDURES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Da Lian, China; 20060811, 11 August 2006 (2006-08-11), XP050023401,
- BENQ MOBILE ET AL: "Discussion on PNM TS 22.259 V1.0.0", 3GPP DRAFT; S1-060036 PNM - DISCUSSION TO TS 22259-V100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. Denver; 20060203, 3 February 2006 (2006-02-03), XP050224401, [retrieved on 2006-02-03]

## Description

### FIELD OF THE INVENTION

The present invention relates to data transmission in communication field, and more specifically, to a method and apparatus for user equipment activation for personal network management.

### BACKGROUND

Ever since the 3rd Generation Partnership Project (3GPP) R5 stage, a core network of Universal Mobile Telecommunications System (UMTS) can be divided into three subsystems, namely, Circuit Switched (CS) Domain, Packet Switched (PS) Domain, and IP Multimedia Subsystem (IMS).

The CS is used to provide CS service connection for users. The CS includes a Mobile Switching Center (MSC) or carrying out switching and signaling control function for CS service, a Gateway Mobile Switching Center (GMSC) which is a MSC for performing mobile user routing function and can be provided in combination with MSC or provided independently, and an Interworking Function server (IWF) which closely relates to MSC and is used to connect Public Land Mobile Network (PLMN) to an Integrated Service Digital Network (ISDN), Public Switched Telephone Network (PSTN) and Public Data Network (PDN). The IWF is used primarily to perform signaling conversion function. The specific function is dependent on service code and the type of network.

The PS is used to provide PS service connection for users. The PS includes a GPRS Support Node (GSN) for delivering packets for PS service users; a Serving GPRS Support Node (SGSN) for providing connection between the core network and the wireless access system, conducting mobility management and session management for PS data service, managing mobility and communication service for mobile stations in mobile network, etc.; a Gateway GPRS Support Node (GGSN) for functioning as an interface between a mobile communication system and other public data network and querying location information, wherein the SGSN and GGSN both provide charging information; and a Border Gateway (BG) for interworking with two GPRS networks and ensuring security of network interworking.

IMS, introduced in the 3GPP R5 stage, is a subsystem formed by overlaying a WCDMA network with the existing packet switched domain. The packet switched domain serves as an upper layer control signaling and a bearer channel of the IMS. The SIP is introduced as a service control protocol. With SIP's simpleness, scalability, convenience in media convergence, the IMS separates service control and bearer control, and provides rich multimedia services. The main function entities in the IMS include a Call Session Control Function (CSCF) entity for user registration control and session control, etc., an application server (AS) providing various service logic control functions, a Home Subscriber Server (HSS) for managing user subscription data, a Media Gateway Control Function (MGCF) and an IP multimedia-media gateway (IM-MGW) for interworking with a circuit switched network. The user accesses the IMS via a proxy-CSCF (P-CSCF) where the user locates. The session and service trigger control and the interaction with the AS service control are implemented by home domain serving-CSCF (S-CSCF) of other registration place.

The HSS is a most important database for users in the IMS subsystem. It stores all subscription related information for supporting each network entity to handle calls and sessions. Specifically, the HSS may include a user ID, user number, and addressing information, user security information; user location information and user profile, etc. A home network may include one or more HSSs. The number of HSS relates to the number of subscribers and capability of network device and details of networking status. The HSS provides an operation center interface for maintaining user data (such as adding, modifying, deleting user subscription data). Also, the HSS supports user data download for Cx interface between HSS and I-CSCF, S-CSCF and for Sh interface between application servers (AS).

Before the emergence of IMS, a Home Location Register is an entity for storing user data of CS domain and PS domain. The HLR supports C interface (interface between HLR and GMSC/MSC), D interface (interface between HLR and VLR), Gr interface (interface between HLR and SGSN), Gc interface (interface between HLR and GGSN). It is known that HSS is a superset of HLR. HSS and HLR are provided together. The HSS integrates HLR function. When a user is registering with the network, the registered information is passed to HLR/HSS, and subsequent operation is performed according to subscription data of the download user. AS may acquire and subscribe to IMS data via the Sh interface, and may acquire part of data in CS and PS domain. However, in actual networking circumstance, HLR and HSS may also be provided separately.

Typically, a user may have several equipments running communication service simultaneously. These equipments may be a CS domain device, an IMS domain device, a PSTN device, respectively. They may also be served by different operators and may receive telecommunication services from different operators. At the same time, these devices may possess different capacities. These different capacities set restriction on the devices in terms of particular applications or specific media types, such as video, image. 3GPP R7 introduces a new service, called personal network management (PNM). Such service is focused on users. It manages the devices of one user collectively or manages the devices used by the user collectively. Therefore, the user is able to make full use of his terminals or external devices with different capacities to get a better service experience.

In the first stage of PNM program, it is more focused on user equipments (UEs) management within the personal network (PN) and the PNM program provides two types of services between UEs in PN, namely, redirection service and private network service. The redirection service is a service that a user activates one or more UEs in advance, and if multiple UEs are activated, these UEs may have different priorities. All subsequent service requests to be sent to any UE in the PN will be terminated at the activated UE. For instance, all video call requests to be sent to any UE in the PN may be redirected to the UE which has the biggest screen in PN. Before the UE can use a redirection service code and private network service, the UE must register with a PN first in order to become a network element in PN.

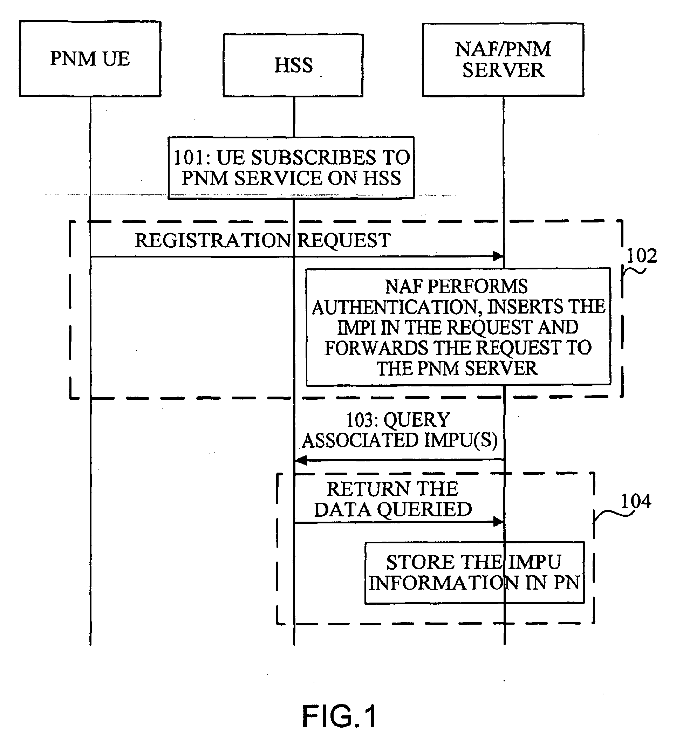

Figure 1 illustrates a conventional flowchart of a UE registering with a PN according to prior art. The method includes the following steps.

Step 101: Before UE initiates a registration procedure, the UE must first subscribe to PNM service at HSS. The HSS may record the IP Multimedia Private Identity (IMPI) which is allowed to register with the PN actively, and copy these data to a PNM server. After the data are copied, the PNM server may assign a unique PN ID for the PN.

Step 102: A registration request sent from a terminal UE may first arrive at a network application function (NAF) entity. The NAF may authenticate the UE ID in a Generic Bootstrapping Architecture (GBA) manner, acquire the IMPI of the UE, and check to see if the IMPI has subscribed to the PNM service at HSS.

Step 103: After the authentication is passed, the NAF may insert the IMPI in the request and forward the request to the PNM server. If the user has registered several IP Multimedia Public Identities (IMPUs) relating to this UE simultaneously, it is necessary to add an indicator in the request to designate one IMPU to be a PreferIMPU. After the PNM server receives the request, the PNM may retrieve a corresponding PN record according to the IMPI in the request and use this IMPI to query HSS for IMPU relating to this IMPI.

Step 104: The HSS returns data requested by the PNM server. When the IMPU(s) contained in the registration request are all in the returned data from HSS, these IMPU(s) are valid. In addition, it is required that the PreferIMPU in the request be in a registered status. When all these requirements are met, PNM server is allowed to add these IMPU(s) and corresponding IMPI data to the PN, which indicates a successful registration. In the present application, the registered IMPU(s) refers to the IMPU(s) whose information is stored in the PLMN network.

The registration request may also require an International Mobile Equipment Identity (IMEI) of UE. The PNM server stores the IMEI and also contains this IMEI when returning a response indicating a successful registration. This IMEI is served as a ID of UE, as a personal network element (PNE) in the PN. All PNM configuration and management requests initiated by the UE are required to contain this IMEI in order to prevent the situation that the user uses a same Universal IC Card (UICC) with the terminal replaced.

In the conventional method, when the UE registers with PN, if the registration request carries a plurality of IMPUs, one IMPU is designated as the PreferIMPU. Subsequently, if this UE is activated and the UE serves as the one that terminates the service in redirection service, this PreferIMPU will be filled, as a new target address, into a header of service request (Request-URI). However, since the S-CSCF in the IMS may check the media type contained in the request, therefore, if the subscription data of the PreferIMPU does not indicates a subscription to the media type, the S-CSCF may deny this request, which might affect the call and reduce the session connectivity rate, deteriorating thereby the user's service experience.

D1 titled "3rd Generation partnership Project; Technical Specification Group Service and System Aspects; Service requirements for Personal Network Management (PNM); Stage 1 (Release 8)" describes a Personal Network (PN) and a Personal Network Management (PNM) It discloses requirements for User Equipment (UE) redirecting services. In D1, users shall be able to activate a certain UE as the default UE for terminating services addressed to any of the UEs belonging to the PN. Furthermore, D1 discloses that redirection of terminating services and service media shall be done for only public user identities and addresses belonging to a UE of the PN.

D2 titled "Procedures for PNM User Interactions" describes a PNM architecture and a PNM registration procedure. D2 discloses a HTTP message flow for self-registration of a UE in which authentication of an IMPI/IMSI requires an HTTP request based on a bootstrapping security relation with the same IMPI/IMSI.

### SUMMARY

There is provided a method and apparatus for UE activation in PNM according to embodiments of the present invention.

An activation method for personal network management (PNM) service according to one embodiment of the present invention comprises:
receiving, by a PNM server, an activation request initiated from a user equipment (UE) wherein the activation request contains an activation configuration which contains an IP Multimedia Public Identity (IMPU) of the UE and a parameter indicating an activation level;
authenticating, by the PNM server, a capability of the UE and a service subscribed to by the IMPU, and storing the activation configuration when the authentication passes and the UE and the IMPU are registered with a personal network (PN); and
after receiving a request for triggering a redirection service, searching for, by the PNM server, the IMPU of the UE which meets a service requirement according to the request for triggering the redirection service and the stored activation configuration, and treating the searched out IMPU as a new target address of a service request.

By registering the UE and associated IMPU(s) which met the requirement, and activating the registered UE and associated IMPU(s) as desired, and selecting activated IMPU(s) as the redirected target address Request-URI, wherein the selected IMPU(s) corresponds to one or more of the service type and its media type, embodiments of the present invention are able to eliminate the failure in handling service request due to the reason that one IMPU is selected among multiple IMPU(s) as the PreferIMPU when the registration request carries more than one IMPU. As such, the session connectivity rate is enhanced, and the service experience is improved.

The invention is defined by the method according to claim 1.

### BRIEF DESCRIPTION OF THE DRAWINGS

Figure 1 is a flowchart of a prior art procedure for a UE to register with PN;
Figure 2 is a block diagram of a registration system according to one embodiment of the present invention;
Figure 3 is a schematic flowchart of a registration procedure according to one embodiment of the present invention;
Figure 4 is a signaling flowchart of an active registration procedure according to one embodiment of the present invention;
Figure 5 is a signaling flowchart of a procedure for a registration invitation to a third party according to one embodiment of the present invention;
Figure 6 is a block diagram of a UE to be registered according to one embodiment of the present invention;
Figure 7 is a block diagram of a registration PNM server according to one embodiment of the present invention;
Figure 8 is a block diagram of an activation system according to one embodiment of the present invention;
Figure 9 is a schematic flowchart of an activation procedure according to one embodiment of the present invention;
Figure 10 is a signaling flowchart of an active activation procedure for a UE according to one embodiment of the present invention;
Figure 11 is a signaling flowchart of triggering redirection service according to one embodiment of the present invention;
Figure 12 is a flowchart of a PNM server redirecting, video and audio components of a session to two UEs respectively in one session according to one embodiment of the present invention;
Figure 13 is a block diagram of an activated UE according to one embodiment of the present invention;
Figure 14 is a block diagram of an activation PNM server according to one embodiment of the present invention; and
Figure 15 is a flowchart of a PNM server redirecting, video and voice components of a session to two UEs respectively in one session according to one embodiment of the present invention.

### DETAILED DESCRIPTION

Conventional art fails to check, when the UE is subsequently activated, on the service/media subscription status of the IMPUs assocaited with the UE in the IMS when the US carries a plurality of IMPUs in a registration request and thus one IMPU needs to be designated as a prefered IMPU (PreferIMPU). Consequently, requests are redirected to the activated UE during a subsequent execuition of a redirection service. Moreover, when the designated PreferIMPU is employed for routing, because the service/media subscription of PreferIMPU in the IMS does not support the service/media type requested by the redirected request, the S-CSCF may reject the request. To solve the above described problem, the present invention provides various emboidments for UE regsitration and activation in a new PNM service in conjunction with the accompanying drawings.

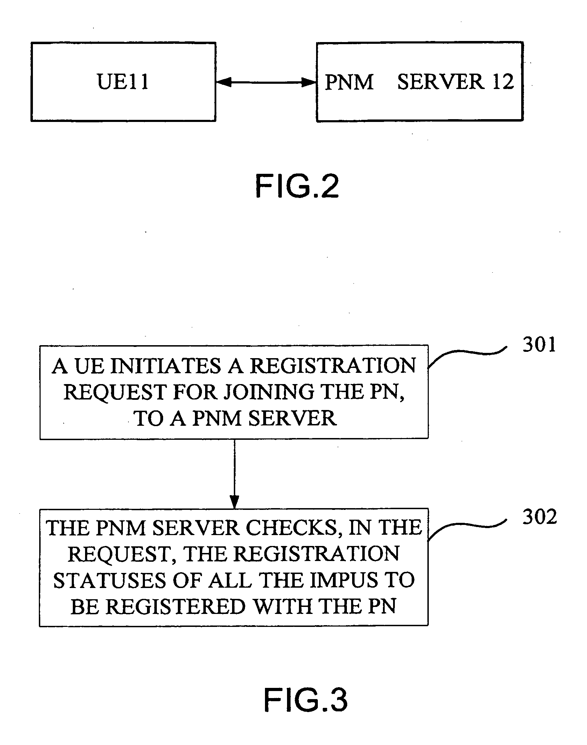

Figure 2 illustrates a block diagram of a registration system according to one embodiment of the present invention. The registration system includes a UE11 which has subscribed to the PNM service and a PNM server 12. The UE11 is adapted to initiate a registration request towards the PNM server 12. The registration request contains one ore more IMPUs. The PNM server 12 is adapted to receive the registration request initiated by the UE11 and save the IMPU(s) which have been registered in the PLMN.

The PNM server 12 is further adapted to return, to the UE 11 initiating the registration request, a response to the registration request or adapted to return, to the UE11 initiating the registration request and the UE associated with the IMPU, a response to the registration request.

When the registration type in the registration request is an active registration, the PNM server 12 is adapted to return, to a UE which initiates the registration request, a response to the registration request, wherein the UE which initiates the registration request is associated with the IMPU(s). When the registration type in the registration request is a registration invitation to a third party, the PNM server 12 returns, to a UE which initiates the registration request and the invited UE, a response to the registration request, where the invited UE is associated with the IMPU(s).

When the registration type in the registration request is the active registration, the PNM server 12 is further adapted to store the ID of the UE11 which initiates the registration request. When the registration type in the registration request is a registration invitation to a third party, the PNM server 12 is further adapted to store the ID of the invited UE.

If the system further includes a Home Subscriber Server (HSS) of the UE associated with the IMPU, the PNM server 12 may be further adapted to send to the HSS a query request which contain an IMPI associated with the IMPU, and receive a query response containing the registered IMPU(s) returned from the HSS. The HSS is adapted to find all the registered IMPU(s) associated with the IMPI based on the received IMPI, and return the query response containing the registered IMPU(s) to the PNM server.

The system further includes an S-CSCF for sending to the PNM server a third party registration request containing registered IMPU(s) it stores and sending a notification message to the PNM server after receiving a request for subscribing to registration events of the IMPU(s). The notification message includes registered IMPU(s) which are associated with the same IMPI as does the IMPU(s). The PNM server 12 is adapted to initiate a request for subscribing to the registration events of the IMPU(S) to the S-CSCF after receiving the third party registration request, and receive the notification message returned by the S-CSCF. The PNM server 12 further compares the IMPU(s) contained in the registration request and the registered IMPU(s) in the notification message in order to obtain the registration status of the IMPU(s) contained in the registration request.

The system of the embodiments may operate according to the following description. Initially, the UE11 which has subscribed to PNM service may initiate a registration request to PNM server. The registration request may contain one or more IMPU(s) which intend to register with the PN. Moreover, the registration request may further include a registration type and an ID of the UE which initiates the registration request. After the PNM server receives the registration request, the PNM server may query the HSS of the registered UE for the information of IMPU(s) which have registered with the PLMN. When the registration type is an active registration, the registered UE refers to a UE initiating the registration request. When the registration type is a registration invitation to a third party, the registered UE refers to an invited UE. After finding the information of the registered IMPUs, the PNM server compares the information of the registered IMPU(s) with the IMPU(s) in the registration request. Then, the PNM server stores the registered IMPU(s) which is also contained in the registration request. When the registration type is an active registration, the PNM server also stores the ID of the UE which initiates the registration request, and returns a response to the registration request to the UE. When the registration type is a registration invitation to a third party, the PNM server also stores the invited UE and returns a response to the registration request to the UE initiating the registration request and the invited UE.

Figure 3 illustrates a flowchart of a registration method according to one embodiment of the present invention. The registration method mainly includes the following steps.

Step 301: A UE initiates a registration request for joining the PN, to a PNM server. The request contains one or more IMPU(s) which intend to register with PN, an IMPI associated with the IMPU(s) and a registration type. The registration type may include an active registration and a registration invitation to a third party.

If the registration type is a registration invitation to a third party, the PNM server may query an S-CSCF serving the current invited UE via an Sh interface and send the registration request to the S-CSCF. The S-CSCF is further routed to the invited UE. After the invited UE receives the request, if the UE agrees to join the PN, the UE initiates a registration procedure actively.

Step 302: The PNM server checks the registration statuses of all the IMPU(s) to be registered with the PN in the request. For IMPU(s) which has been registered with PLMN, the PNM server may record these IMPU(s) and regard the registration as successful. If the request message does not contain the IMPU(s) which meets the above requirements, the current registration is regarded as a failure.

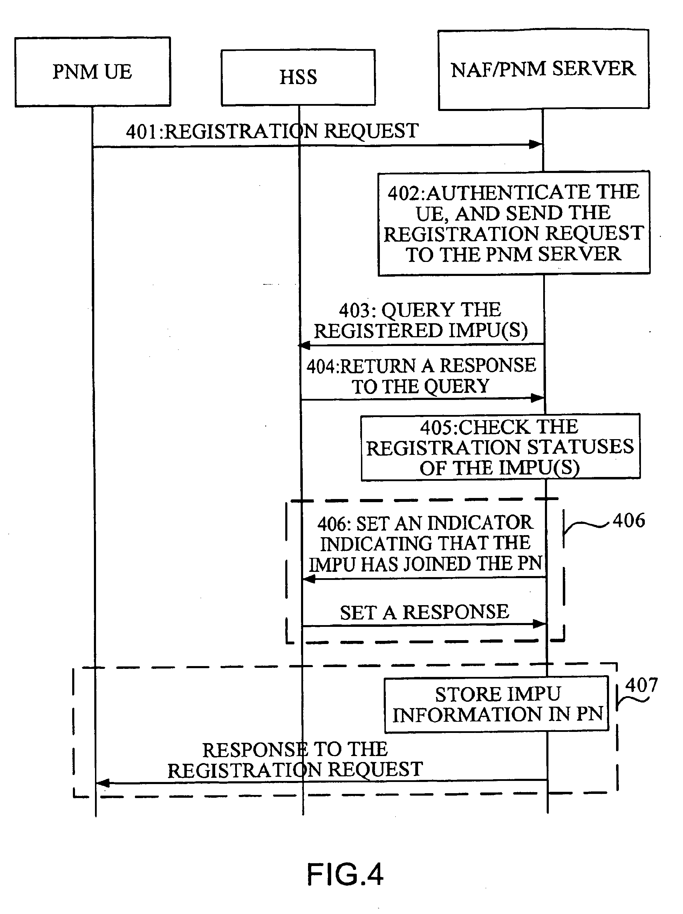

Embodiment 1 is a procedure of an active registration of a UE which has subscribed to a PNM service (PNM UE). In the embodiment, the PNM UE is an IMS terminal. As illustrated in Figure 4, the procedure mainly includes the following steps.

Step 401: The PNM UE initiates a registration request.

If the PNM UE has already subscribed to the PNM service before the PNM UE initiates the registration request, the PNM server may store an IMPU and IMPI list which have subscribed to the PNM service, and assign a unique PN-ID to the IMPUs and IMPIs that belong to the same PN.

Then, the PNM UE initiates the registration request. The registration request contains IMPU(s) to be registered with the PN and a registration type. In one embodiment of the present invention, the registration type is an active registration. Further, the registration request may also contain a device ID of the UE initiating the registration request.

Step 402: The NAF authenticates the PNM UE.

The registration request initiated by the PNM UE may first arrive at the NAF. The NAF authenticates the request in a GBA manner. After the authentication is passed, the NAF may send the registration request to the PNM server. Besides the information mentioned the step 401, the NAF may also add the IMPI of the authenticated UE in the request.

Step 403: The PNM server queries the HSS of the UE to be registered for the registered IMPU(s).

When the PNM server receives the request, the HSS may send a request query. The query request may contain an IMPI associated with the IMPU(s) and find all the IMPUs which are associated with the IMPI and have been registered in the PLMN.

Step 404: The HSS returns a query response to the PNM server.

The HSS finds all the registered IMPU(s) based on the query request sent from the PNM server, and then returns the information to the PNM server.

Step 405: The PNM server checks the registration statuses of the IMPU(s) to be registered with the PN in the registration request.

The PNM server compares the IMPU(s) contained in the registration request with the registered IMPU(s) list returned from the HSS. If one or more of the IMPU(s) carried in the registration request is found in the list returned from the HSS, the PNM server may allow these IMPU(s) in the returned list to be registered with the PN, but the remaining unregistered IMPU(s) is not allowed to be registered. If none of the IMPU(s) in the registration request is registered, a registration failure is returned.

Steps 403 to 405 implement a procedure for determining the registration status of IMPU(s). In one embodiment of the present invention, other methods may also be used to perform the determining procedure. In the IMPU registration procedure, the successfully registered IMPU(s) is stored in the S-CSCF. Therefore, the S-CSCF may send a request for a third party registration to the PNM server in accordance with an initial Filter Criteria designed during PNM service subscription. The request contains registered IMPU(s). However, the IMPU(s) may not be all the registered IMPU(s) which the S-CSCF stores. Therefore, the PNM server may send to the S-CSCF a request for subscribing to registration event (reg-event) of the IMPU(s) after the PNM server receives the request for a third party registration. After the S-CSCF receives the subscription request, the S-CSCF sends a notification message (Notify) to the PNM server. The notification message may contain registered IMPU(s) associated a same IMPI with which the IMPU(s) are also associated. Then, the PNM server may compare the IMPU(s) contained in the registration request with the registered IMPU(s) sent by the S-CSCF in order to obtain the registration status of the contained IMPU(s) in the registration request.

Further, after the S-CSCF receives the subscription request, if the registration status of the stored registered IMPU(s) which are associated with the same IMPI have changed, the S-CSCF may send a notification message (Notify) to the PNM server. The notification message (Notify) may contain the registered IMPU(s) whose registration status has been changed. In other words, the S-CSCF may send in real-time the information of registered IMPU(s) to the PNM server in a notification message (Notify).

Step 406: An indicator indicating that the IMPU(s) has joined the PN is set.

For the IMPU(s) whose registration status has been checked in step 405, the PNM server may send, to the corresponding HSS of the IMPU. a request for setting an indicator indicating that the IMPU(s) has been registered with the PN. After receiving the request, the HSS may determine if the IMPU(s) has joined other PN based on the PN_ID. The determination procedure includes checking the IMPU(s) record stored in the HSS to see if there exists different PN-ID. If there is no different PN_ID, it means that the IMPU(s) has not joined other PN. Then, the IMPU(s) record is marked as successful, indicating that these IMPU(s) and IMPIs have joined the PN. If there exists a different PN_ID, it means that the IMPU(s) has joined other PN. Then, the IMPU(s) record is marked as a failure and a configuration response is returned to the PNM server.

In this embodiment, the request for configuring an indicator indicating that the IMPU has been registered with the PN may be an update data message (Sh-Update) of Sh interface. Moreover, the request may also include a PN_ID corresponding to the PN, and IMPI corresponding to the above mentioned IMPU(s) and the IMPU(s).

Step 407: After the PNM server receives a response of successful configuration from the HSS, the PNM server stores the IMPU(s) information in the PN. The information may include IMPU(s) and IMPI. Also, the information may include a device ID of the UE that is registered with the PN. Then, the PNM server may return a response to the registration request to the UE. When none of the IMPU(s) contained in the registration request is registered, the response to the registration request may contain registration failure information. When all or parts of the IMPU(s) contained in the registration request are registered, the response to the registration request contains registration success information and the stored IMPU list.

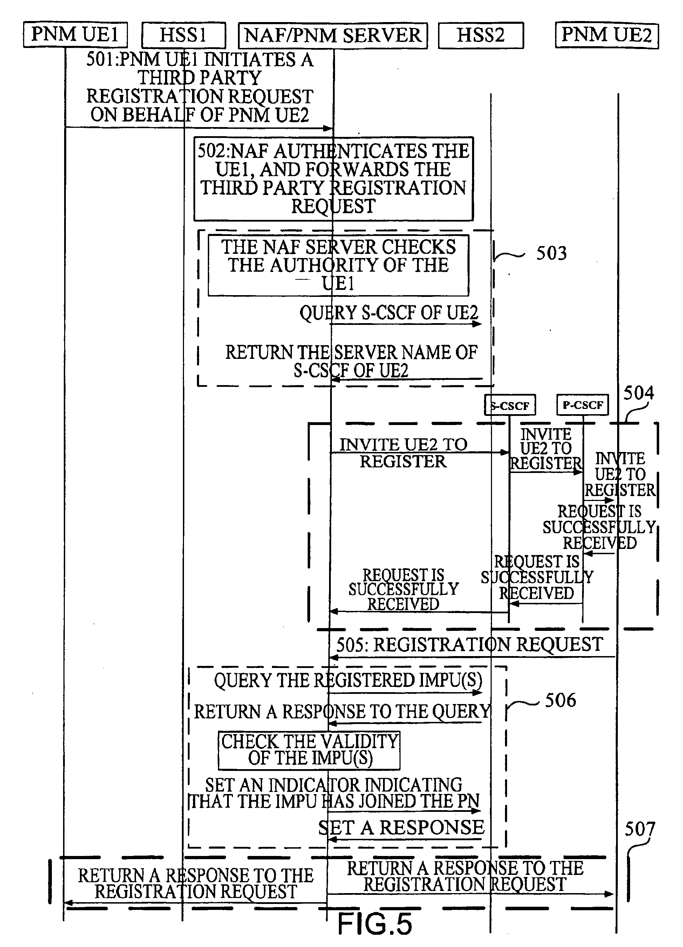

Embodiment 2 is a third party registration procedure where a PNM UE1 invites a PNM UE2 to join the PN. In this embodiment, both the PNM UE1 and the PNM UE2 are IMS terminals. As illustrated in Figure 5, the procedure mainly includes the following steps:

Step 501: The PNM UE1 initiates a request for a third party registration on behalf of the PNM UE2.

The PNM UE1 initiates a request for third party registration through Ut interface. The request contains IMPU(s) of the invited UE and a registration type. The registration type is a registration invitation to a third party.

Step 502: The NAP authenticates the UE1.

The third party registration request is sent to NAF first by Http Client of the UE1. The NAF authenticates the UE1 in a GBA manner. After the authentication is passed, the NAF forwards the request to the PNM server. Besides the information mentioned in step 501, the request also contains IMPI of the UE1.

Step 503: The PNM server checks the authority of the UE1.

Only the UE having the authority to invite a third party and having registered with the PN can invite other UE. Therefore, the PNM server needs to verify if the UE1 is authorized according to the IMPI of UE1. After the verification is passed, the PNM server may query an HSS2 of the UE2 for the S-CSCF which serves the UE2 currently, via Sh interface. The HSS2 returns the name of S-CSCF server serving the UE2 to the PNM server. If the S-CSCF does not exist, error information is returned.

Step 504: The PNM server sends to the UE2 an invitation for inviting the UE2 to register.

Then PNM server initiates a request for inviting the UE2 to register to the S-CSCF. The request may be a MESSAGE message of SIP. If the HSS2 returns the error information at step 503, the PNM server returns ERROR to the UE1. The invitation request is routed from the S-CSCF to the P-CSCF, and then to the UE2. After receiving the request, the UE2 returns a message indicating that the request is successfully received along the opposite direction of the invitation request. After the message reaches the PNM server, the PNM server may initiate a timer at the same time.

Step 505: When UE2 agrees to join the PN, the UE2 may send a registration request to the PNM server.

If the UE2 agrees to join the PN, the UE2 may send a registration request to the PNM server. The request contains IMPI and IMPU(s) of UE2. Moreover, the request may also include device ID of the UE2. After receiving the request, the PNM server disables the timer initiated at step 504. If the timer expires and the PNM server still does not receive a registration request from the UE2, the PNM server may send an error response to the UE1.

Step 506: UE2 joins PN. The step is similar to the active registration procedure in steps 403 to 407 of embodiment 1.

Step 507: The PNM server returns a registration result to the UE1 and the UE2.

The PNM server sends a response to the registration request to the UE2, returning a list of IMPU(s) which are registered successfully to the UE2. The PNM server subsequently returns the registration result to the UE1.

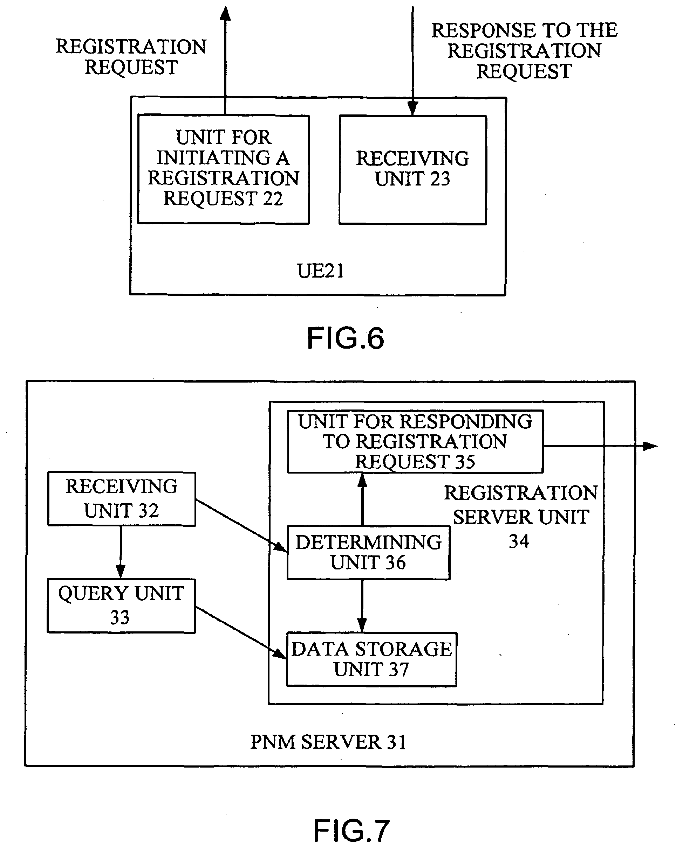

Figure 6 illustrates a UE21 according to one embodiment of the present invention. The UE21 includes a unit for initiating a registration request 22. The unit 22 is adapted to initiate a registration request to the PNM server. The registration request contains one or more IMPU(s).

The UE21 further includes a receiving unit 23 for receiving a response to the registration request returned from PNM server.

The UE operates in the following way. A UE which has subscribed to a PNM service first sends, to the PNM server, a registration request containing one or more IMPUs. The PNM server then checks the UE and the content in the request. After the registration procedure is completed, the UE receives a response to the registration request from PNM server no matter the registration succeeds or fails.

Figure 7 illustrates a PNM server 31 according to one embodiment of the present invention. The PNM server 31 includes a receiving unit 32, a query unit 33 and a registration server unit 34. The receiving unit 32 is adapted to receive the registration request initiated from UE. The registration request contains one or more IMPUs. The query unit 33 is adapted to determine the registration status of IMPU(s) in the PLMN. The registration server unit 34 is adapted to store the IMPU(s) in the registration request which have been registered with PLMN.

The registration server unit 34 includes a unit for responding to registration request 35. The unit for responding to registration request 35 is adapted to send a response to the registration request to the UE initiating the registration request, or send a response to the registration request to the UE initiating the registration request and the UE corresponding to the IMPU(s).

The registration server unit 34 includes a determining unit 36 for determine a registration type in the registration request.

The registration type includes an active registration and a registration invitation to a third party. When the determining unit 36 determines that the registration type is an active registration, the unit for responding to registration request 35 returns a response to the registration request to the UE initiating the registration request and the invited UE.

The registration server unit 34 may also include a data storage unit 37. When the registration type is an active registration, the data storage unit 37 stores the registered IMPU(s) and the ID of the UE initiating the registration request. When the registration type is a registration invitation to a third party, the data storage unit 37 stores the registered IMPU(s) and the invited UE.

In this embodiment, the PNM server operates in the following way. After the PNM server receives the registration request initiated by the UE which has subscribed to the PNM service, the PNM server first determines the registration type. If the registration type is an active registration, the PNM server may determine the registration status of the IMPU(s) contained in the registration request, store the registered IMPU(s) in the registration request and the ID of UE initiating the registration request, and returns a registration response to the UE initiating the request. If the registration is a registration invitation to a third party, the PNM server first determines if the UE initiating the invitation request is authorized, and if the UE has registered with PN. If the UE is authorized, the PNM server may send a registration invitation to the UE to be invited. Subsequent steps are similar to those of active registration, except that the stored information further includes ID of the invited UE besides the registered IMPU(s). The PNM server sends a registration response to the UE initiating the invitation and the invited UE at the same time.

After the UE and IMPU(s) in the embodiment 1 and 2 successfully register with the PN, the UE may initiate an activation request. The activation procedure after a successful registration according to one embodiment of the present invention is described below in connection with the accompanying drawings.

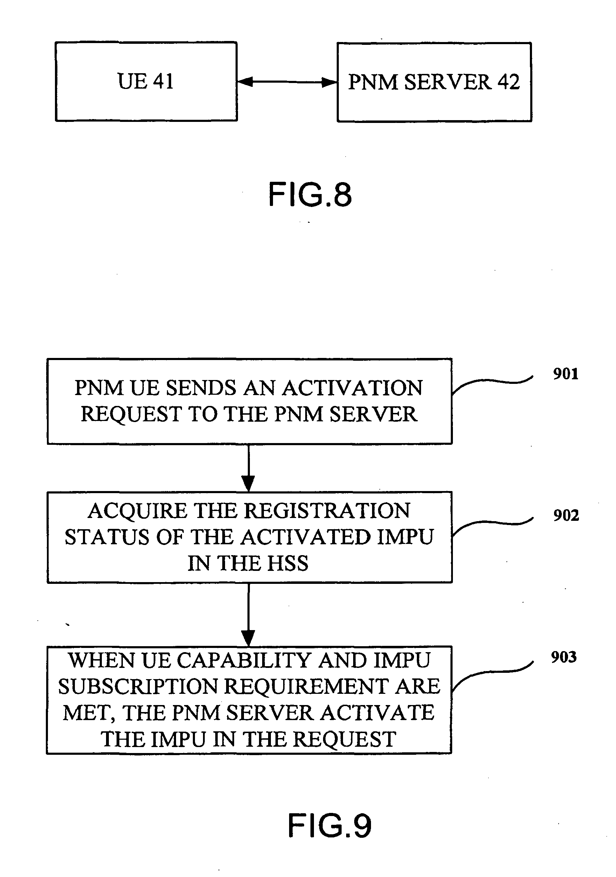

Figure 8 illustrates a block diagram of an activation system according to one embodiment of the present invention. The activation system includes a UE41 and a PNM server 42. The UE41 is adapted to send an activation request to the PNM server 42. The activation request contains an activation configuration. The activation configuration includes parameters of IMPU(s) and an activation level. The PNM server 42 stores information of UE and IMPU(s) registered with PN, receives the activation request initiated by UE41, and authenticates the UE capability and service that the IMPU(s) has subscribes to respectively. After the authentication is passed, and the UE and the IMPU(s) have been registered with PN, the PNM server stores the activation configuration.

The PNM server 42 is adapted to receive the registration request initiated by the UE which has subscribed to the PNM service. The registration request contains one or more IMPU(s) to be registered with PN. The PNM server 42 is further adapted to determine the registration status of the IMPU(s) in PLMN, and then store the registered IMPU(s). Moreover, when the registration type in the registration request is an active registration, the PNM server is further adapted to store ID of the UE initiating the registration request. When the registration type is a registration invitation to a third party, the PNM server is adapted to store the ID of invited UE.

The PNM server 42 is further configured to return an activation response to the UE41 initiating the activation request, or return an activation response to the UE initiating the activation request and the activated UE.

When the activation type in the activation request is an active activation, the PNM server 42 is adapted to return an activation response to UE initiating the activation request. When the activation type is a registration invitation to a third party, the PNM server 42 is adapted to return an activation response to UE initiating the activation request and the activated UE.

When activation type in the activation request is an active activation, the PNM server 42 is adapted to store the ID of UE initiating the activation request, wherein the UE initiating the activation request has been registered and associated with IMPU(s). When activation type is a registration invitation to a third party, the PNM server 42 is adapted to store the ID of invited UE, wherein the invited UE has been registered and associated with IMPU(s).

After the activation configuration is stored, the PNM server 42 is further adapted to receive a request for triggering a redirection service, and find out the activated IMPU(s) which meets the service requirement according to the request and the stored activation configuration, and treat the IMPU(s) as the new target address of a service request.

The activation system in the embodiment operates in the following way. The UE first initiates an activation request to the PNM server. The activation request contains an activation configuration. The activation configuration includes parameters of IMPU(s) and an activation level. The activation configuration further includes an activation type. After the PNM server receives the activation request, the PNM server determines the activation type. When the activation type is an active activation, the PNM server authenticates the capability of the UE initiating the activation request and the subscription information of the IMPU(s). If the authentication is passed and the UE and IMPU(s) are the ones recorded by the PNM server, the PNM server may store the activation configuration and the ID of the UE, and return an activation response to the UE. If the activation type is an activation invitation to a third party, the PNM server may verify if the UE initiating the invitation is authorized and if the UE has been registered with the PN. If the conditions are met, the PNM server sends an activation invitation to the invited UE. The invited UE repeats the procedure of active activation. The PNM server returns an activation response to the UE initiating the invitation and the invited UE.

In the embodiments of the present invention, the parameters of the activation level include a global activation, a service activation and a service component activation. The global activation indicates that the UE executes the service that the IMPU(s) has subscribed to. The service activation indicates that the UE the service specified by the UE. Service component activation indicates that the UE handles the media component in the service specified by the UE. When the parameter value of the activation level is service activation or service component activation and the activation configuration also includes one or more of the activated service code and the media type ID, the service specified by the UE may include the service relating to the service code. The media component in the service specified by the UE may include the media component relating to the media type ID.

Figure 9 illustrates a flowchart of an activation procedure according to one embodiment of the present invention. The parameter value of the activation level in this embodiment is one or more of the service activation and service component activation. The activation method mainly includes the following steps.

Step 901: The PNM UE sends an activation request to the PNM server.

Before the UE is activated, the UE to be activated and its associated IMPU(s) must be the ones that have been registered with PN. The registration method may be the foregoing registration method, or may be other registration method. After the registration is completed successfully, the UE initiates an activation request. The request contains an activation configuration which includes one or more IMPU(s) to be activated, service codes of these IMPU(s) to be redirected to, and/or media type ID and the priority parameter of the activated UE, as well as the device ID of the activated UE.

Step 902: The registration status of the activated IMPU(s) is acquired in the HSS.

The PNM server sends a request for the registration status of the activated IMPU(s) to the HSS. When the registration status of the IMPU(s) in the PLMN changes, the HSS may notify the PNM server. Only the IMPU(s) in registration status can operate. Therefore, in order to inform the PNM server easily when the registration status changes, the PNM server may add its address in the IMPU(s) data record corresponding to the HSS via Sh interface after the activation succeeds.

Step 903: When UE capability and IMPU(s) subscription requirement are met, the PNM server may activate the IMPU(s) in the request.

The PNM server authenticates the service information that the IMPU(s) in the request has subscribed to and the capability information of the activated UE in order to determine whether the IMPU(s) subscription and the UE capability support one or more redirected service code and media type. When the requirement is met, the PNM server may store the activation configuration in the request. When the requirement is not met, an error response is returned, indicating that the current activation operation is denied because the IMPU(s) subscription or UE capability do not support.

In one embodiment of the present invention, since the parameter value of the activation level is a service activation or service component activation, the activation request contains a combination of the redirected service code and the redirected media type. Since the service contains one or more media type, the subscription information of the activated IMPU(s) must support all the media type contained in the service when the service contains a redirected service.

After the UE and its associated IMPU(s) are activated, the PNM server receives a service request initiated by the call initiator and executes the redirection service. The PNM server first determines the media type contained in the current service request and determines there exists an activated UE corresponding to the media type. If such UE exists, the PNM server first redirects the media component. If the activation configuration corresponding to the media type does not exist in the PN, the PNM server redirects the service type. If the PNM server determines that there are multiple corresponding activated IMPU(s) corresponding to one ore more activated UEs for the service code and media type in the service request, the PNM server may select one IMPU among these IMPU(s) and return the selected IMPU(s) or return a user specified IMPU(s).

After step 903, in the case where the activation type is an active activation, the PNM server may return an activation response to the UE initiating the activation request. In the case where the activation type is an activation invitation to a third party, the PNM server may return an activation response to the UE initiating the activation request and the activated UE.

In the case where the activation type is an activation invitation to a third party, the method further includes below steps after step 901.

A. The PNM server determines if the UE initiating the activation request is authorized and has been registered with PN, wherein the activation request indicates an activation type of an activation invitation to a third party. If the UE is authorized, the PNM server sends an activation invitation to the invited UE. If the UE is not authorized, the PNM server returns an activation failure response to the UE initiating the activation request. When the UE is authorized and has been registered with PN, and after the invited UE receives the activation invitation, the invited UE then initiates an activation request to the PNM server wherein the request may carry the ID of the invited UE.

Accordingly, at step 903, when the activation type is an active activation, the PNM server may also store the ID of the UE initiating the activation request. When storing the ID, the PNM server also determines if the UE initiating the activation request is the UE associated with the activated IMPU(s) and has been registered with PN. If these conditions are met, the PNM server executes a next activation operation; otherwise, the activation is regarded as a failure. When the activation type is an activation invitation to a third party, the PNM server stores the ID of the invited UE. Also, when storing the ID of the invited UE, the PNM server determines if the invited UE is the UE associated activated IMPU(s) and has been registered with PN. If these conditions are met, the PNM server continues to execute a next activation operation; otherwise, the activation is regarded as a failure.

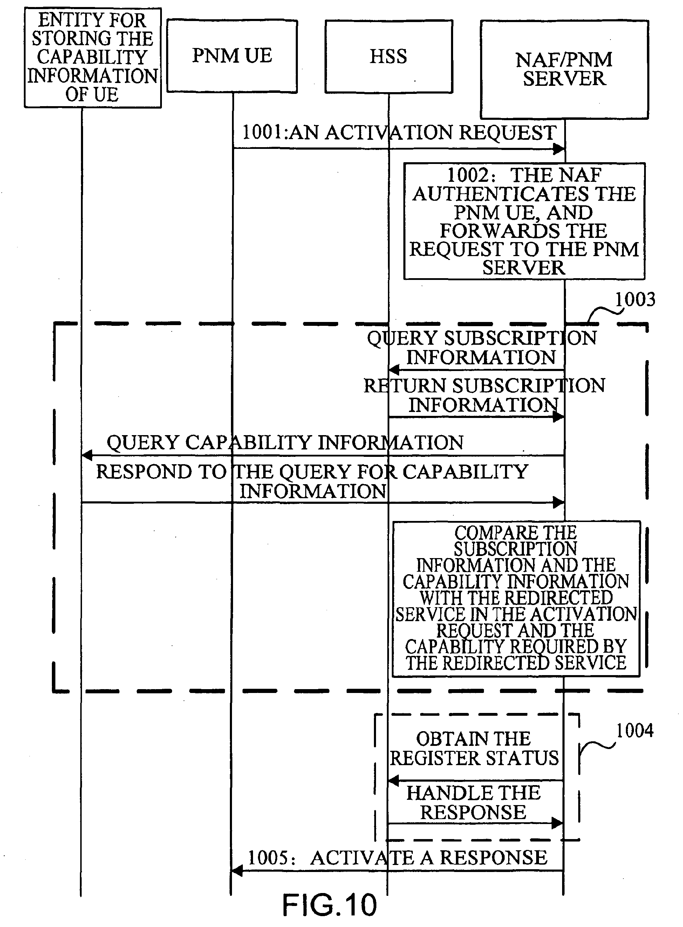

Embodiment 3 is an activation procedure initiated by UE actively. In one embodiment, the parameter value of the activation level is set to service activation or service component activation. As shown in Figure 10, the procedure mainly includes the following steps.

Step 1001: The PNM UE initiates an activation request to the NAF.

When the PNM UE and its associates IMPU(s) have been registered with PN, the PNM UE sends an activation request to the NAF via Ut interface. The request contains an activation configuration which includes one ore more IMPU(s) to be activated, a service code of the service which needs to be redirected to this IMPU(s) and/or media type ID and a UE priority parameter, as well as a device ID of the PNM UE initiating the activation request.

Step 1002, the NAF authenticates the PNM UE. After the authentication is passed, the IMPI of the PNM UE is then added into the request which is subsequently forwarded to the PNM server.

Step 1003: The service information that the IMPU(s) has subscribed to and the capability information of the activated UE are authenticated.

After receiving the activation request, and the PNM server determines that the activated IMPU(s) has joined the PN, the PNM server may send, to the HSS, a service information query request for querying the service information that the IMPU(s) has subscribed to and store the information returned from the HSS. In this embodiment, the subscribed service information may be communication service ID (SID). In addition, the service code may also be SID. The subscribed service information query request may be a query message (Sh-Pull) of Sh interface. Also, the PNM service may acquire capability information of the activated UE from the entity storing the UE capability information.

In the embodiment, when the parameter value of the activation level is global activation, the PNM server may send to the HSS a request for querying service information that IMPU(s) has subscribed to. If the PNM server can acquire the service information that the IMPU(s) has subscribed to, the authentication of the IMPU(s) subscribed service is passed.

When the parameter value of the activation level is service activation or service component activation, the PNM server compares the service information that the IMPU(s) has subscribed to with one or more of the redirected service code and media type in the activation request, and compares the UE capability information with the capability required by one or more of the service code and media type. If the subscribed service information contains the service code, and the UE capability information is able to reach the capability required by one or more of the service code and media type, it is considered that the IMPU(s) can be activated regarding one or more of the service code and media type, and the authentication is passed.

The step of authenticating UE capability includes the following steps. When the parameter value of the activation level is global activation, and the capability of the UE meets entire or partial requirement of the service that the IMPU(s) has subscribed to, then the authentication is passed. When the parameter value of the activation level is service activation or service component activation, and the capability of the UE and the service that the IMPU(s) has subscribed to meet the requirement of one or more of the service code and media type contained in the activation configuration, then the authentication is passed.

After the PNM server receives the activation request and if the request carries UE ID, the PNM server may determine if the UE in the activation request is the UE associated with the activated IMPU(s) and has been registered with the PN. If the conditions are met, the PNM server continues to execute the next activation operation; otherwise, the activation is regarded as failed and the PNM server may return a failure response to the UE initiating the activation request.

Step 1004: The registration status of the activated IMPU(s) is acquired in the HSS.

The PNM server sends to the HSS a request for acquiring the registration status of the activated IMPU(s) and the information of the subscribed service. After the HSS receives the request, the HSS stores the address of the PNM server. If the address is stored successfully, the HSS may send a message to the PNM server to inform of the event when one or more of the registration information of the activated IMPU(s) in the PLMN communication network and the information of the service that the IMPU(s) has subscribed to is changed. If the HSS fails to store the address, the HSS may return a failure information to the PNM server. When one or more of the subsequent registration status of the IMPU(s) and the subscribed service information is changed, the HSS may inform the PNM server.

Step 1005, when the HSS stores the address of the PNM server successfully, the PNM server may store the activation configuration in the request. Then, the PNM server may return an activation response to the PNM UE. The response contains the service code of the service which has been successfully activated and the corresponding IMPU(s) as well as the priority of the UE associated with the IMPU(s).

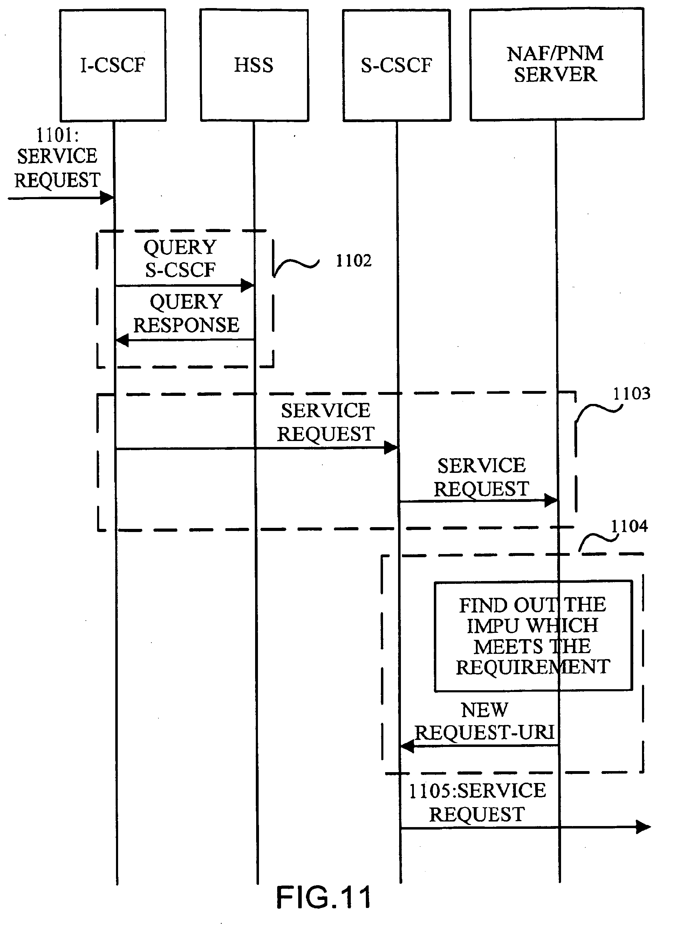

After the UE and its associated IMPU(s) are activated, the PNM server receives a service request initiated by the call initiator and executes the redirection service. Embodiment 4 is a procedure of triggering redirection service in the PN when a call initiator initiates a service request. As shown in Figure 11, the procedure mainly includes the following steps.

Step 1101: The call initiator initiates a service request. The UE in IMS domain is functioned as a called party. The called party home domain, I-CSCF, receives the service request.

Step 1102: The called party home domain I-CSCF sends a request to the HSS storing the information of the called UE, requesting to query the S-CSCF server serving the called UE currently. Then, the HSS returns the address of the S-CSCF server serving the called UE currently.

Step 1103: The I-CSCF forwards the service request to the S-CSCF serving the called UE currently. The S-CSCF serving the called UE detects an initial Filter Criteria (iFC) which meets the requirements and triggers the service request to the PNM server based on this iFC via S-CSCF.

Step 1104: After the PNM server receives the service request, the PNM determines that a redirection of service needs to be performed. First, the PNM server determines if there exists an IMPU corresponding to the activated UE for the media type. If such IMPU(s) exists, a redirection operation is performed on the media component. That is, the IMPU(s) of the UE which has the highest priority is served as a new Request-URI and is returned to the S-CSCF server. If such IMPU(s) does not exists, the PNM server determines the service type of the service request, and searches the PN for the activated IMPU(s) corresponding to the UE with the highest priority for the service and regards this IMPU(s) as the new Request-URI and returns it to the S-CSCF server.

If the PNM server determines that there are more than one activated IMPUs corresponding to one ore more activated UEs for the service code and media type in the request, the PNM server may select one IMPU among these IMPUs and return the address of the selected IMPU as the new target address for the service request.

Step 1105: After the S-CSCF server receives the new Request-URI, the S-CSCF server initiates a service request to the target UE.

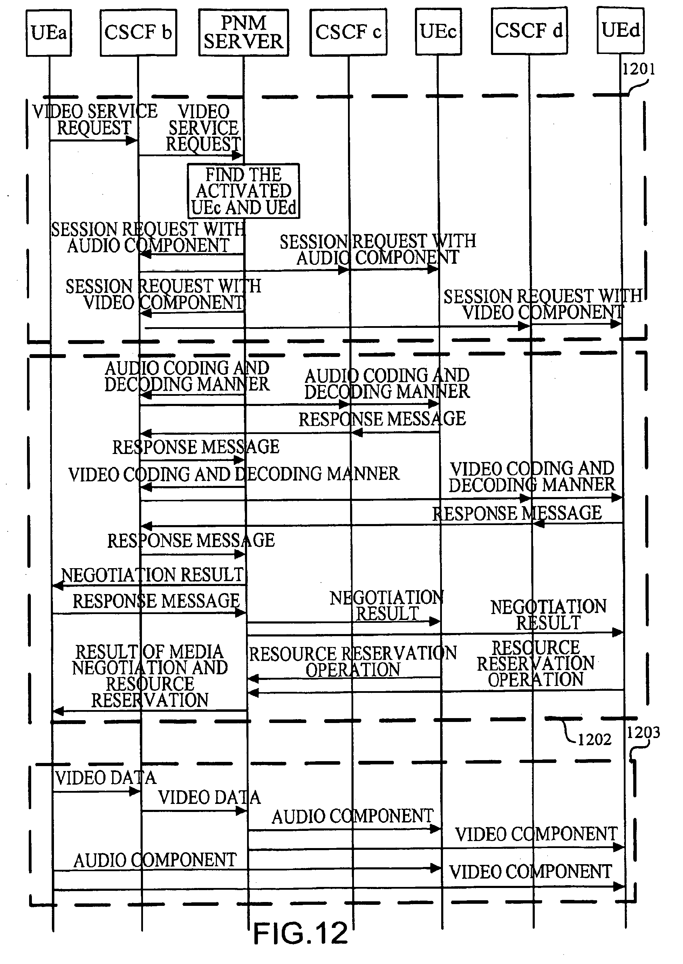

Embodiment 5 is a procedure that the PNM server redirects the video and audio components to two devices respectively in one session. Figure 12 illustrates a flowchart of the procedure. The procedure mainly includes the following steps.

Step 1201: The PNM server redirects the audio and video services to the UEc and UEd, respectively.

In one embodiment of the present invention, the UE utilizes a service code and media type ID to activate UE. In one embodiment, the value range for the media type ID may be m lines based on Session Description Protocol (SDP) indicating the media type. Therefore, parameters such as a service code based on video service and m lines based on SDP indicating the media type can be used by the user to activate UEc and UEd, respectively. The UEc and UEd are the redirected UEs for audio and video, respectively.

After the activation procedure is completed successfully, the calling user UEa first initiates a call to the called user UEb in the PN, initiating a video service request. The video service request is first connected to the S-CSCFb. After the S-CSCFb receives the service request, the S-CSCFb triggers the service request to the PNM server via iFC.

After the PNM server receives the service request, the PNM server determines that the service type is a video service and detects that there are the UEc and UEd in the PN which are activated respectively for audio and video components in the video service. As a result, the PNM server terminates the service request and regenerates two session requests based on the activation configuration for the audio and video components in the PN, and sends newly generated session requests, to the UEc and UEd, respectively, wherein the new session requests includes description of coding and decoding manner for audio and video components. In one embodiment, the step of sending these two session requests by the PNM server includes the following steps. The PNM server first terminates the original session request, and sends, to the S-CSCFb, the newly generated session requests which are described in a coding and decoding manner with audio component. The S-CSCFb forwards the session requests to the UEc via S-CSCFc. Of course, the step of PNM server sending the session request including description of a coding and decoding manner for the video component to the UEd is similar.

Step 1202: The PNM server returns the result of media negotiation and resource reservation regarding the UEc and UEd to the UEa.

After the PNM server sends the session requests to the UEc and UEd, the PNM server may perform a media negotiation with the UEc and UEd, respectively. The operation is described below. The PNM server may incorporate the audio coding and decoding manner in the SDP protocol in the newly generated session request and send the request to S-CSCFb which then forwards the request to the UEc via the S-CSCFc. After the UEc receives the request, the UEc acquires the coding and encoding manner. If the UEc selects the received the coding and encoding manner based on the coding and decoding manner in the request, the UEc returns a response message to the PNM server through the S-CSCFc and S-CSCFb. The media negotiation procedure between the PNM server and the UEd is similar. After the PNM server negotiates with the UEc and UEd, the negotiation result is returned to the UEa. The result can be returned in such a way that the PNM server returns one message containing two negotiation results, or two messages for two negotiation results. After the UEa receives the negotiation result, and if the UEa agrees with the negotiation result, the UEa returns a response message and routes the response message to the PNM server. The PNM server separates negotiation results of the coding and decoding manners for video and audio components in the response message and sends the results to the UEc and UEd, respectively. After the UEc and UEd receive the negotiation results respectively, they perform a resource reservation operation, respectively, and route a response message to PNM server, respectively. The PNM server returns the operation results of media negotiation and resource reservation of the UEc and UEd to the UEa. The results can be returned in one message or in two messages.

Step 1203: A video session set up. The audio data is interacted between the UEa and UEc. The video component is interacted between the UEa and UEd.

During conversation, the PNM server still remains in the signaling path of the session. When receiving the video data session request sent from the UEa, the PNM server terminates the original request and generates two session requests based on the activation configuration for audio component and video component, and forwards to the UEc and UEd respectively. When receiving the response returned from the UEc and UEd, the two responses are combined and returned to the UEa. After video session is set up, the audio data is interacted between UEa and UEc. The video component is interacted between the UEa and UEd.

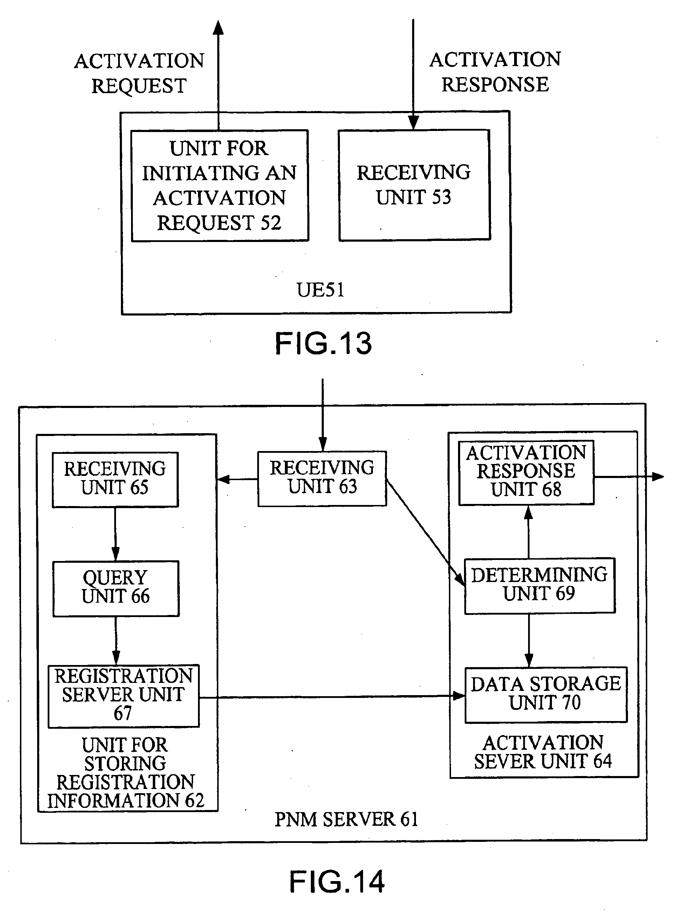

Figure 13 illustrates a UE51 according to one embodiment of the present invention. The UE51 includes a unit for initiating an activation unit 52. The unit is adapted to initiate an activation request to PNM server. The activation request contains activation configuration which includes IMPU(s) and parameters of an activation level.

The UE51 further includes a receiving unit 53 for receiving a response to the activation request returned from PNM server.

The UE51 operates in the following way. UE registered in the PN first initiates an activation request to the PNM server. The activation request contains activation configuration. The activation configuration contains IMPU(s) and parameter of the activation level. PNM server then starts an activation procedure. After the activation procedure is over, the UE receives the activation response returned from PNM server.

Figure 14 illustrates a PNM server 61 according to one embodiment of the present invention. The PNM server 61 includes a registration information storage unit 62, a receiving unit 63 and an activation server unit 64. The registration information storage unit 62 is adapted to store the UE registered in the PN and the IMPU(s) information. The receiving unit 63 is adapted to receive an activation request initiated from UE. The activation request contains an activation configuration. The activation configuration includes IMPU(s) of the activated UE and the parameter of the activation level. The activation server unit 64 is adapted to authenticate the UE capability and the IMPU(s) subscribed service. After the authentication is passed and the UE and IMPU(s) have registered in the PN, the activation configuration is stored.

The registration information storage unit 62 includes a receiving unit 65, a query unit 66 and a registration server unit 67. The receiving unit 65 is adapted to receive the registration request initiated from UE. The registration request contains one or more IMPUs. The query unit 66 is adapted to query the registration statuses of IMPU(s) in the PLMN. The registration server unit 67 is adapted to store the IMPU(s) in the registration request which have been registered with PLMN.

The activation server 64 includes an activation response unit 68 adapted to return an activation response to the UE initiating the activation request, or return an activation response to the UE initiating the activation request and the activated UE.

The registration server unit 64 includes a determining unit 69 for determine an activation type in the activation request. The activation type includes an active registration and an activation invitation to a third party. When the determining unit 69 determines that the activation type is an active activation, the activation response unit 68 returns an activation response to the UE initiating the activation request. When the determining unit 69 determines that the activation type is an activation invitation to a third party, the activation response unit 68 returns an activation response to the UE initiating the activation request and the activated UE.

The activation server unit 64 further includes a data storage unit 70. When the activation type is an active activation, the data storage unit 70 further stores the ID of UE initiating the activation request. When the activation type is an activation invitation to a third party, the data storage unit 70 further stores the ID of the invited UE.

The PNM server operates in the following way. After the PNM server receives the activation request from UE, the PNM server determines the activation type. When the activation type is an active activation, the PNM server determines if the capability of the UE initiating the activation request and the IMPU(s) subscription information in the activation request meet the requirement of one or more of the service code and the media type and if the UE and IMPU(s) are registered with PNM server. IF these conditions are met, the PNM server may store store the activation configuration and the ID of the UE, and return an activation response to the UE. If the activation type is an activation invitation to a third party, the PNM server may verify if the UE initiating the invitation is authorized and if the UE has been registered with the PN. If the conditions are met, the PNM server sends an activation invitation to the invited UE. The invited UE repeats the active activation procedure. The PNM server returns an activation response to the UE initiating the invitation and the invited UE.

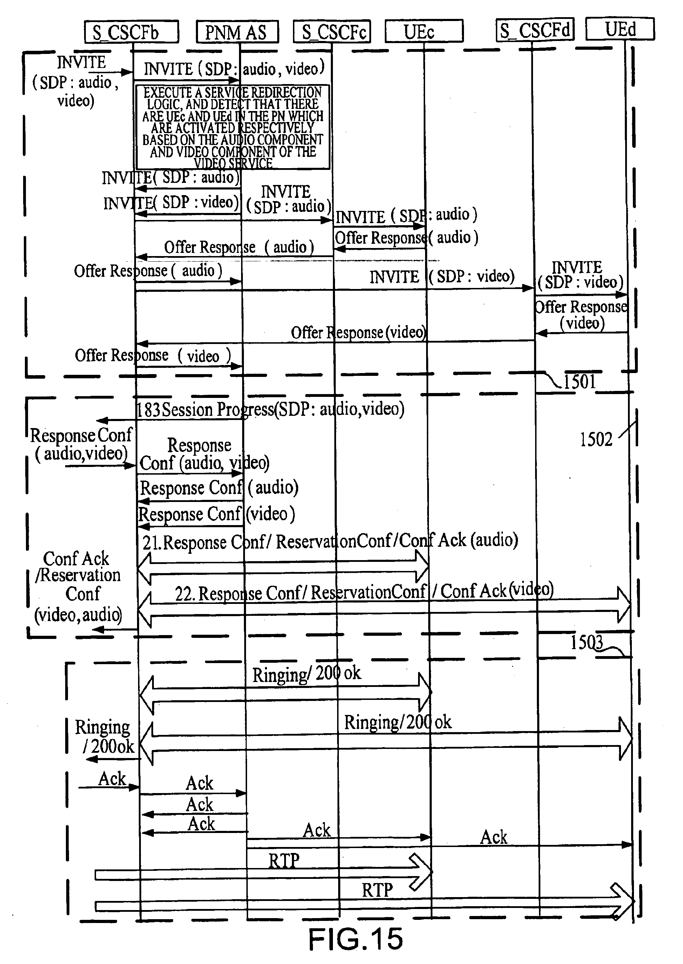

Embodiment 6 is a procedure that the PNM server redirects the video and audio components to two devices respectively in one session. Figure 15 illustrates a flowchart of the procedure. The procedure mainly includes the following steps.

Step 1501: The PNM server redirects the audio session request and video session request to the UEc and UEd, respectively.

In one embodiment of the present invention, the UE utilizes a service code and media type ID to activate UE. In one embodiment, the value range for the media type ID may be "m" lines based on Session Description Protocol (SDP) indicating the media type. Therefore, parameters such as a service code based on video service and m lines based on SDP indicating the media type can be used by the user to activate the UEc and UEd, respectively. The UEc and UEd are the redirected/activated UEs for audio and video components, respectively.

After the activation procedure is completed successfully, the calling party first initiates a call to a called party UEb in the PN, initiating a video service request (INVITE). The INVITE contains a description of coding and decoding manner for audio component, and a description of coding and decoding for video component. The INVITE is first delivered to S-CSCFb. After the S-CSCFb receives the INVITE, the S-CSCFb triggers the INVITE to the PNM server via iFC.

After the PNM server receives the INVITE, the PNM server determines that the service type is a video service and executes a service redirection logic. The PNM server then detects that there are UEc and UEd in the PN which are activated respectively for audio and video components based on a video service. As a result, the PNM server terminates the service request and regenerates two session requests based on the activation configuration in the PN for the audio and video component, and sends the newly generated session requests, to UEc and UEd, respectively, wherein the new session requests includes descriptions of coding and decoding manners for audio and video components. In one embodiment, the step of sending these two session requests by the PNM server includes the following steps. The PNM server first terminates the original session request, and sends, to the S-CSCFb, the newly generated session request which includes a description of the coding and decoding manner for audio component (INVITE (SDP.audio)). The S-CSCFb forwards the session request to the UEc via S-CSCFc. Of course, the step of PNM server sending the session request which includes a description of the coding and decoding manner for video component (INVITE (SDP.video)) to the UEd is similar.

After the UEc and UEd receives the INVITE (SDP.audio) and INVITE (SDP.video) respectively, the UEc and UEd return an audio component response message (Offer Response (audio)) and a video component response message (Offer Response (video)) to the PNM AS via S-CSCFb. The Offer Response (audio) contains an audio component supported by UEc. The Offer Response (video) contains a video component supported by the UEd.

Step 1502: The PNM server returns the result of media negotiation and resource reservation regarding the UEc and UEd to the calling party.

When the PNM server receives the Offer Response (audio) and Offer Response (video) returned from the UEc and UEd, the PNM server combines the two response messages into a new media negotiation result and returns the result to the calling party. Of course, the result can be sent via a 183 message.

In the media negotiation result received by the calling party, the coding and decoding manners for audio components and video components supported by UEc and UEd may be in a various forms. Therefore, the calling party may select one of the coding and decoding manner for audio component and video component from the media negotiation result, and return the selected information to the S-CSCFb via a response message (Response Conf). The S-CSCFb returns the response message (Response Conf) to the PNM AS.

The PNM AS separates the coding and decoding manners for audio component and video component in the response message, and sends them to the UEc and UEd via response messages. The sending process is implemented by S-CSCFb forwarding the messages.

After the UEc and UEd receive, respectively, the response messages containing coding and decoding manner for audio component and video component determined finally by the calling party, the UEc and UEd finalize media negotiation and perform resource reservation operation, respectively, and route the response message after operation to PNM server, respectively. The PNM server returns the operation results of media negotiation and resource reservation of the UEc and UEd to the calling party. The results can be returned in one message or in two messages.

Step 1503: A video session is set up. The audio data interacts between calling party and UEc. The video component is interacted between the calling party and UEd.

During video session setup, the calling party receives a Ringing instruction of the UEc and UEd forwarded by the S-CSCFb. The instruction may be transmitted via 200.

After the video session begins, the calling party sends the audio and video data to UEc and UEd, respectively, via transport protocol, such as Real-time Transport Protocol (RTP).

In the final process of session setup, the PNM server always remains in the signaling path in the session. The PNM server is responsible for combining the responses from two called parties, the UEc and UEd, into one message and returning the message to the calling party or splitting the message from the calling party into two messages and delivering the messages to UEc and UEd, respectively. After the session is set up successfully, the audio component is interacted between the calling party terminal and the UEc, and the video component is interacted between the calling party terminal and the UEd.

In conclusion, since the IMPU(s) subscribes to the media type contained in the service request, the service request can reach the target UE by just redirecting the target UE. Therefore, the issue that the current service request is denied by the network due to the reason that the IMPU(s) has not subscribed to the service request can be addressed.

Apparently, various modifications and variations may be made by those skilled in the art without departing from the scope of the appended claims. Accordingly, the present invention is intended to cover these modifications and variations if these modification and variation according to the present invention fall within the scope of the claims of the present invention and equivalent thereof.

## Claims

1. An activation method for personal network management, PNM, service, **characterized in** comprising:
Receiving, by a PNM server, an activation request initiated from a user equipment, UE, wherein the activation request contains an activation configuration which contains an IP Multimedia Public Identity, IMPU, of the UE and a parameter indicating an activation level (901);
Authenticating, by the PNM server, a capability of the UE and a service subscribed to by the IMPU, and storing the activation configuration when the authentication passes and the UE and the IMPU are registered with a personal network, PN (903); and **characterised in that**,
after receiving a request for triggering a redirection service, searching for, by the PNM server, the IMPU of the UE which meets a service requirement according to the request for triggering the redirection service and the stored activation configuration, and treating the searched out IMPU as a new target address of a service request (1104).

2. The activation method of claim 1, **characterized in that**,
a value of the parameter indicating the activation level is a global activation, the step of authenticating, by the PNM server, the service subscribed to by the IMPU comprises:
sending, by the PNM server, to a Home Subscriber Server, HSS, a request for querying information of the service subscribed to by the IMPU; wherein if the PNM server can acquire the information of the service subscribed to by the IMPU, the authentication on the service subscribed to by the IMPU is passed.

3. The activation method of claim 1, **characterized in that**, a value of the parameter indicating the activation level is a service activation or a service component activation, the activation configuration comprises at least one of a service code and a media type ID.

4. The activation method of claim 3, **characterized in that**, the step of authenticating, by the PNM server, service subscribed to by the IMPU comprises:
sending, by the PNM server, to a Home Subscriber Server, HSS, a request for querying information of the service subscribed to by the IMPU; comparing the information of the service subscribed to by the IMPU with the service code in the activation request; wherein if the information of the service subscribed to by the IMPU contains the service code, the authentication on the service subscribed to by the IMPU is passed.

5. The activation method of claim 1, **characterized in that**, a value of the parameter indicating the activation level is a global activation, the step of authenticating the capability of the UE comprises:
if it is determined that the capability of the UE meets entire or parts of the requirement of the service subscribed to by the IMPU, the authentication is passed.

6. The activation method of claim 2, **characterized in that** the step of authenticating the capability of the UE comprises:
if it is determined that the capability of the UE meets entire or parts of the requirement of the service subscribed to by the IMPU, the authentication is passed.

7. The activation method of claim 3 or 4, **characterized in that**, the step of authenticating the capability of the UE comprises:
if it is determined that the capability of the UE and the service subscribed to by the IMPU meet entire or parts of the requirement of the service code or the media type, the authentication is passed.

8. The activation method of claim 1, **characterized in that**, the activation request further comprises an activation type, the activation type is an activation invitation to a third party, the method further comprises:
determining, by the PNM server, that the UE is authorized for invitation and that the UE has registered with the PN; and sending an activation invitation to an invited UE.

9. The activation method of claim 8, **characterized in** further comprising:
initiating, by the invited UE, an activation request to the PNM server after receiving the activation invitation, wherein the activation request carries an activation configuration of the invited UE.

10. The activation method of claim 1, **characterized in that**, before storing, by the PNM server, the activation configuration, the method further comprises:
initiating, by the PNM server to a Home Subscriber Service, HSS, to which the UE belongs, a request for obtaining a change of at least one of a registration status of the IMPU and information of the service subscribed to by the IMPU;
storing, by the HSS, an address of the PNM server after the HSS receives the request; and if the address is stored successfully, sending, by the HSS, a message to the PNM server when at least one of the registration status of the IMPU and the information of the service subscribed to by the IMPU changes.

11. The activation method of claim 1, **characterized in that**, when the PNM server searches out more than one IMPU of the UE which meets the service requirement, the PNM server selects any one IMPU as the new target address of the service request or selects one IMPU specified by an user as the new target address of the service request.

## Patentansprüche

1. Aktivierungsverfahren für persönlichen Netzmanagementdienst, PNM-Dienst, **dadurch gekennzeichnet, dass** es Folgendes umfasst:
Empfangen einer von einem Anwendergerät, UE, eingeleiteten Aktivierungsanforderung durch einen PNM-Server, wobei die Aktivierungsanforderung eine Aktivierungskonfiguration enthält, die eine öffentliche IP-Multimediakennung, IMPU, des UE und einen Parameter, der eine Aktivierungsebene angibt, enthält (901);
Authentifizieren durch den PNM-Server einer Fähigkeit des UE und eines durch die IMPU abonnierten Dienstes und Speichern der Aktivierungskonfiguration, wenn die Authentifikation bestanden wird und das UE und die IMPU in einem persönlichen Netz, PN, eingetragen sind (903); und **dadurch gekennzeichnet, dass**
nach dem Empfangen einer Anforderung zum Auslösen eines Umleitungsdienstes, durch den PNM-Server Suchen nach der IMPU des UE, die eine Dienstanforderung erfüllt, gemäß der Anforderung zum Auslösen des Umleitungsdienstes und der gespeicherten Aktivierungskonfiguration und Behandeln der herausgesuchten IMPU als eine neue Zieladresse einer Dienstanforderung (1104).

2. Aktivierungsverfahren nach Anspruch 1, **dadurch gekennzeichnet, dass** ein Wert des Parameters, der die Aktivierungsebene angibt, eine globale Aktivierung ist, und der Schritt des Authentifizierens durch den PNM-Server des durch die IMPU abonnierten Dienstes Folgendes umfasst:
Senden einer Anforderung zum Abfragen von Informationen des Dienstes, den die IMPU abonniert hat, durch den PNM-Server zu einem Heimatteilnehmerserver, HSS; wobei dann, wenn der PNM-Server die Informationen des durch die IMPU abonnierten Dienstes erhalten kann, die Authentifikation auf den durch die IMPU abonnierten Dienst bestanden ist.

3. Aktivierungsverfahren nach Anspruch 1, **dadurch gekennzeichnet, dass** ein Wert des Parameters, der die Aktivierungsebene angibt, eine Dienstaktivierung oder eine Dienstkomponentenaktivierung ist, wobei die Aktivierungskonfiguration einen Dienstcode und/oder eine Medientyp-ID umfasst.

4. Aktivierungsverfahren nach Anspruch 3, **dadurch gekennzeichnet, dass** der Schritt des Authentifizierens des durch die IMPU abonnierten Dienstes durch den PNM-Server Folgendes umfasst:
Senden einer Anforderung zum Abfragen von Informationen über den durch die IMPU abonnierten Dienst durch den PNM-Server zu einem Heimatteilnehmerserver, HSS; Vergleichen der Informationen über den durch die IMPU abonnierten Dienst mit dem Dienstcode in der Aktivierungsanforderung; wobei dann, wenn die Informationen über den durch die IMPU abonnierten Dienst den Dienstcode enthalten, die Authentifikation auf den von der IMPU abonnierten Dienst bestanden ist.

5. Aktivierungsverfahren nach Anspruch 1, **dadurch gekennzeichnet, dass** ein Wert des Parameters, der die Aktivierungsebene angibt, eine globale Aktivierung ist, und der Schritt des Authentifizierens der Fähigkeit des UE Folgendes umfasst:
falls bestimmt wird, dass die Fähigkeit des UE die Anforderungen des durch die IMPU abonnierten Dienstes vollständig oder teilweise erfüllt, ist die Authentifikation bestanden.

6. Aktivierungsverfahren nach Anspruch 2, **dadurch gekennzeichnet, dass** der Schritt des Authentifizierens der Fähigkeit des UE Folgendes umfasst:
falls bestimmt wird, dass die Fähigkeit des UE die Anforderungen des durch die IMPU abonnierten Dienstes vollständig oder teilweise erfüllt, ist die Authentifikation bestanden.

7. Aktivierungsverfahren nach Anspruch 3 oder 4, **dadurch gekennzeichnet, dass** der Schritt des Authentifizierens der Fähigkeit des UE Folgendes umfasst:
falls bestimmt wird, dass die Fähigkeit des UE und der durch die IMPU abonnierte Dienst die Anforderungen des Dienstcodes oder des Medientyps vollständig oder teilweise erfüllt, ist die Authentifikation bestanden.

8. Aktivierungsverfahren nach Anspruch 1, **dadurch gekennzeichnet, dass** die Aktivierungsanforderung ferner einen Aktivierungstyp umfasst, wobei der Aktivierungstyp eine Aktivierungsaufforderung an einen dritten Teilnehmer ist, wobei das Verfahren ferner Folgendes umfasst:
Bestimmen durch den PNM-Server, dass das UE zur Aufforderung berechtigt ist und dass das UE in dem PN eingetragen ist; und Senden einer Aktivierungsaufforderung an ein aufgefordertes UE.

9. Aktivierungsverfahren nach Anspruch 8, **dadurch gekennzeichnet, dass** es ferner Folgendes umfasst:
Einleiten einer Aktivierungsanforderung zu dem PNM-Server durch das aufgeforderte UE nach dem Empfangen der Aktivierungsaufforderung, wobei die Aktivierungsanforderung eine Aktivierungskonfiguration des aufgeforderten UE führt.

10. Aktivierungsverfahren nach Anspruch 1, **dadurch gekennzeichnet, dass** das Verfahren vor dem Speichern der Aktivierungskonfiguration durch den PNM-Server ferner Folgendes umfasst:
Einleiten durch den PNM-Server zu einem Heimatteilnehmerdienst, HSS, zu dem das UE gehört, einer Anforderung zum Erhalten einer Änderung eines Eintragungsstatus der IMPU und/oder von Informationen über den durch die IMPU abonnierten Dienst;
Speichern einer Adresse des PNM-Servers durch den HSS, nachdem der HSS die Anforderung empfängt; und falls die Adresse erfolgreich gespeichert ist, Senden einer Nachricht durch den HSS zu dem PNM-Server, wenn sich der Eintragungsstatus der IMPU und/oder die Informationen über den durch die IMPU abonnierten Dienst ändern.

11. Aktivierungsverfahren nach Anspruch 1, **dadurch gekennzeichnet, dass** dann, wenn der PNM-Server mehr als eine IMPU des UE heraussucht, die die Dienstanforderung erfüllt, der PNM-Server irgendeine IMPU als die neue Zieladresse der Dienstanforderung auswählt oder eine durch einen Nutzer spezifizierte IMPU als die neue Zieladresse der Dienstanforderung auswählt.

## Revendications

1. Procédé d'activation d'un service de gestion de réseau personnel, PNM, **caractérisé en ce qu'**il comprend :
la réception, par un serveur PNM, d'une requête d'activation lancée depuis un équipement utilisateur, UE, la requête d'activation contenant une configuration d'activation qui contient une Identité Publique Multimédia IP, IMPU, de l'UE, et un paramètre indiquant un niveau d'activation (901) ;
l'authentification, par le serveur PNM, d'une capabilité de l'UE et d'un service souscrit par l'IMPU, et la mémorisation de la configuration d'activation quand l'authentification réussit et l'UE et l'IMPU sont enregistrés auprès d'un réseau personnel, PN (903) ; et **caractérisé par** :
après la réception d'une requête de déclenchement d'un service de réacheminement, la recherche, par le serveur PNM, de l'IMPU de l'UE qui répond à une exigence de service en fonction de la requête de déclenchement du service de réacheminement et de la configuration d'activation mémorisée, et le traitement de l'IMPU recherchée comme nouvelle adresse cible d'une requête de service (1104).

2. Procédé d'activation selon la revendication 1, **caractérisé en ce que** une valeur du paramètre indiquant le niveau d'activation est une activation globale, l'étape d'authentification, par le serveur PNM, du service souscrit par l'IMPU comprenant :
l'envoi, par le serveur PNM, à un Serveur de Rattachement d'Abonné, HSS, d'une requête d'interrogation d'informations du service souscrit par l'IMPU ; dans lequel si le serveur PNM peut acquérir les informations du service souscrit par l'IMPU, l'authentification du service souscrit par l'IMPU a réussi.

3. Procédé d'activation selon la revendication 1, **caractérisé en ce qu'**une valeur du paramètre indiquant le niveau d'activation est une activation de service ou une activation de composant de service, la configuration d'activation comprenant au moins l'un d'un code de service et d'un ID de type de support.

4. Procédé d'activation selon la revendication 3, **caractérisé en ce que** l'étape d'authentification, par le serveur PNM, d'un service souscrit par l'IMPU comprend :
l'envoi, par le serveur PNM, à un Serveur de Rattachement d'Abonné, HSS, d'une requête d'interrogation d'informations du service souscrit par l'IMPU ; la comparaison des informations du service souscrit par l'IMPU au code de service dans la requête d'activation ; dans lequel, si les informations du service souscrit par l'IMPU contiennent le code de service, l'authentification du service souscrit par l'IMPU a réussi.

5. Procédé d'activation selon la revendication 1, **caractérisé en ce que** qu'une valeur du paramètre indiquant le niveau d'activation est une activation globale, l'étape d'authentification de la capabilité de l'UE comprenant :
s'il est déterminé que la capabilité de l'UE satisfait la totalité ou une partie de l'exigence du service souscrit par l'IMPU, l'authentification a réussi.

6. Procédé d'activation selon la revendication 2, **caractérisé en ce que** l'étape d'authentification de la capabilité de l'UE comprend :
s'il est déterminé que la capabilité de l'UE satisfait la totalité ou une partie de l'exigence du service souscrit par l'IMPU, l'authentification a réussi.

7. Procédé d'activation selon la revendication 3 ou 4, **caractérisé en ce que** l'étape d'authentification de la capabilité de l'UE comprend :
s'il est déterminé que la capabilité de l'UE et le service souscrit par l'IMPU satisfont la totalité ou une partie de l'exigence du code de service ou du type de support, l'authentification a réussi.

8. Procédé d'activation selon la revendication 1, **caractérisé en ce que** la requête d'activation comprend en outre un type d'activation, le type d'activation étant une invitation d'activation à un tiers, le procédé comprenant en outre :
la détermination, par le serveur PNM, que l'UE est habilité pour l'invitation et que l'UE est enregistré auprès du PN ; et l'envoi d'une invitation d'activation à un UE invité.

9. Procédé d'activation selon la revendication 8, **caractérisé en ce qu'**il comprend en outre :
le lancement, par l'UE invité, d'une requête d'activation au serveur PNM après la réception de l'invitation d'activation, la requête d'activation comportant une configuration d'activation de l'UE invité.

10. Procédé d'activation selon la revendication 1, **caractérisé en ce qu'**il comprend en outre, avant la mémorisation, par le serveur PNM de la configuration d'activation :
le lancement, par le serveur PNM à un Service de Rattachement d'Abonné, HSS, auquel l'UE appartient, d'une requête d'obtention d'un changement d'au moins l'un d'un état d'enregistrement de l'IMPU et d'informations du service souscrit par l'IMPU ;
la mémorisation, par le HSS, d'une adresse du serveur PNM après que le HSS a reçu la requête ; et si l'adresse est mémorisée correctement, l'envoi, par le HSS, d'un message au serveur PNM quand au moins l'un de l'état d'enregistrement de l'IMPU et des informations du service souscrit par l'IMPU change.

11. Procédé d'activation selon la revendication 1, **caractérisé en ce que** lorsque le serveur PNM recherche plus d'une IMPU de l'UE qui satisfait l'exigence de service, le serveur PNM sélectionne n'importe quelle IMPU comme nouvelle adresse cible de la requête de service ou sélectionne une IMPU spécifiée par un utilisateur comme nouvelle adresse cible de la requête de service.
